# FASCICULE DE BREVET EUROPEEN

(11) **EP 3 435 778 B1**
(45) Date de publication et mention de la délivrance du brevet: **24.02.2021**
(21) Numéro de dépôt: 17715285.7
(22) Date de dépôt: 31.03.2017
(51) Int. Cl.: A23G 4/08

(54) **GOMME BASE BIODÉGRADABLE ENRICHIE EN GLUTEN**
MIT GLUTEN ANGEREICHERTE BIOLOGISCH ABBAUBARE KAUGUMMIGRUNDMASSE
GLUTEN-ENRICHED BIODEGRADABLE GUM BASE

(30) Priorité: 31.03.2016 BE 165229
(43) Date de publication de la demande: 06.02.2019
(73) Titulaire: Tereos Starch & Sweeteners Belgium, 9300 Aalst (BE)
(72) Inventeur: CAMUEL, Nadia, 67390 Marckolsheim (FR)
(74) Mandataire: Icosa
(86) Numéro de dépôt international: PCT/IB2017/051854
(87) Numéro de publication internationale: WO 2017/168382

(56) Documents cités:
- EP-A1- 1 066 759
- WO-A1-00/78158
- WO-A1-94/17673
- WO-A1-2005/092112
- WO-A1-2010/025724
- WO-A2-2011/106598
- US-A- 2 469 861
- US-A- 2 586 675
- US-A- 3 814 815
- US-A1- 2004 142 066

## Description

La présente invention concerne une gomme base enrichie en gluten, le procédé pour obtenir une telle gomme base, le chewing-gum contenant cette gomme base ainsi que le procédé d'obtention d'un tel chewing-gum.

L'art antérieur décrit de nombreux chewing-gums biodégradables contenant des protéines et notamment du gluten.

Néanmoins, les chewing-gums de l'art antérieur bien que biodégradables et digestibles ne présentent pas des qualités organoleptiques similaires ou tout au moins comparables à celles d'un chewing-gum du marché notamment ceux comprenant uniquement de la gomme base synthétique.

A titre indicatif, la demande internationale WO94/17673 ou la demande internationale WO00/78158 proposent un chewing-gum comprenant du gluten et de la glycérine, du propylène glycol, du polydextrose, du carbonate de calcium ou de la farine de riz afin d'ajuster la texture en bouche. Néanmoins, les chewing-gums décrits dans ces demandes ne présentent pas une texture souple et lisse telle que celle observée pour un chewing-gum du marché.

L'art antérieur et notamment la demande de brevet Américain US3814815 propose également des chewing-gums comprenant du gluten partiellement dénaturé et une haute teneur en eau. Cependant cette teneur en eau réduit la durée de vie du chewing-gum obtenu. En outre, la dénaturation du gluten réduit les caractéristiques d'élasticité de la protéine.

WO2011/106598 divulgue un chewing-gum comprenant 3-30% d'élastomère, 0-32% solvant d'élastomère et 0-8 % en poids de la cire de paraffine. L'art antérieur ne propose donc pas un chewing-gum ayant des caractéristiques organoleptiques améliorées tout en maintenant les caractéristiques de durabilité et de biodégradabilité du chewing-gum.

L'invention concerne donc une gomme base comprenant :
- 30 à 70% en masse d'un élastomère, préférentiellement 40 à 60%, et plus préférentiellement 44 à 55%,
- 1 à 20% en masse de gluten de blé préférentiellement, 2 à 15%, plus préférentiellement, 3 à 14%, typiquement, le gluten de blé est natif, ou faiblement réticulé,
- 1 à 20% en masse d'agent plastifiant, préférentiellement, 5 à 15%, , et plus préférentiellement 7 à 13% en masse d'agent plastifiant, typiquement l'agent plastifiant est la glycérine,
- 5 à 25% en masse de cire, préférentiellement entre 10 à 20%, plus préférentiellement entre 12 à 18%, encore plus préférentiellement de 14 à 16%, ladite cire ayant un point de fusion compris entre 50 et 90°C, plus préférentiellement entre 60 et 85°C,
- 0.1 à 25% en masse de charge minérale, préférentiellement 5 à 15%, ou encore 7 à 13%.

Selon la présente invention, par « élastomère » on entend des élastomères naturels, synthétiques et/ou des caoutchoucs. Typiquement, par élastomère on entend une gomme base. Des exemples de caoutchouc sont le caoutchouc butyle et le caoutchouc styrène-butadiène Les élastomères naturels sont par exemple, des substances d'origine végétale telles que le chicle, la gomme couronne, le nispero, le rosadinha, le jelutong, le perillo, le niger gutta, le tunu, le balata, le gutta-percha, le lechi-capsi, le sorva, le gutta kay, leurs analogues ou la combinaison de ceux-ci. Les élastomères synthétiques peuvent être notamment les copolymères styrène-butadiène, le polyisobutylène, les copolymères d'isobutylèneisoprène, le polyéthylène, et la combinaison de ceux-ci, leurs analogues, ou la combinaison de tels analogues. L'élastomère peut comprendre également un polymère vinylique non toxique, tel que l'acétate de polyvinyle et son hydrolysat partiel, l'alcool polyvinylique, ou une combinaison de ceux-ci. Lorsqu'il est utilisé, le poids moléculaire du polymère vinylique peut varier d'environ 3000 Da jusqu'à et y compris environ 94 000 Da. Polymères utiles supplémentaires comprennent: polyvinylpyrrolidone réticulé, le polyméthacrylate de méthyle; les copolymères d'acide lactique, des polyhydroxyalcanoates, l'éthylcellulose plastifié, l'acétatephthalate polyvinylique, ou une combinaison de ceux-ci. L'élastomère selon l'invention peut comprendre des solvants et notamment des résines telles que des résines de terpène et les esters de colophane.

Le « facteur de perte tan delta » ainsi que « module d'élasticité dynamique E' » selon l'invention sont évalués par la technique de DMTA (Dynamic Mechanical Thermal Analysis) sur un équipement TRITEC 2000 commercialisé par TRITON Technology Ltd. L'analyse DMTA est décrite selon la norme DIN 53513. L'analyse DMTA permet par la variation de température de l'échantillon, la mesure du module d'élasticité (E') correspondant aux caractéristiques élastiques de la gomme, du module de perte (E") correspondant aux caractéristiques visqueuses de la gomme et du facteur de perte tan δ renseignant sur les propriétés viscoélastiques de la gomme. Typiquement, le facteur de perte tan delta ainsi que le module d'élasticité dynamique E' ou le module de perte (E") sont évalués à une fréquence de mesure de 1 hz et un déplacement de 0.05 mm en mode single cantilever bending.

Ces pics de perte tan delta, de module d'élasticité dynamique E' ainsi que de module de perte (E") sont observés à une température appliquée à l'échantillon. Ainsi, la température à laquelle ces pics sont observés est indicatrice de la dureté ou des qualités viscoélastiques de l'échantillon et donc de son comportement en fonction de sa température tel que par exemple sa dureté à température ambiante ou dans la bouche lors de la mastication.

Le facteur de perte tan delta ainsi que module d'élasticité dynamique E' sont des comportements visco-élastiques des gommes bases qui sont caractérisés par la DMTA par leur phase respective de transition vitreuse. Cette phase se caractérise par une chute brutale des valeurs du module d'élasticité, correspondant aussi à une chute du module de perte, et à un pic du facteur de perte tan δ. Les gommes bases peuvent ainsi être classifiées en trois catégories de texture : les gommes bases très dures, de dureté moyenne ou de faible dureté.

Une dureté caractérisée par une température au pic du facteur de perte tan δ supérieur à 45°C correspond à une gomme base de forte dureté

Une dureté caractérisée par une température au pic du facteur de perte tan δ inférieur à 33°C correspond à une dureté faible et ne correspond pas au critère d'acceptabilité du marché.

Une dureté caractérisée par une température au pic du facteur de perte tan δ comprise entre 33°C et 45°C correspond à une dureté moyenne particulièrement recherchée sur le marché.

Ainsi, ladite gomme base selon l'invention présente une température au pic de perte tan delta compris entre 33 et 45°C et/ou une chute du module d'élasticité dynamique E' compris entre -2 et -20°C.

Une combinaison de plusieurs types de gommes bases est également possible pour accéder aux propriétés spécifiques recherchées lors du procédé de fabrication et/ou de la mastication du chewing-gum.

Avantageusement, ledit élastomère comprend un mélange :
- d'un premier élastomère présentant une température au pic du facteur de perte tan delta supérieur à 45°C typiquement comprise entre 48 et 55°C et/ou une chute du module d'élasticité dynamique E' supérieure à -22°C préférentiellement compris entre - 15°C et 0°C et
- d'un second élastomère présentant une température au pic du facteur de perte tan delta supérieur à 33°C typiquement compris entre compris entre 30 et 5°C et/ou une chute du module d'élasticité dynamique E' inférieur à -1.2°C, préférentiellement compris entre -10 et -25°C.

Selon la présente invention par « gluten », on entend gluten de blé, préférentiellement, le gluten de blé ajouté au mélange est un gluten de blé vital.

On entend par « agent plastifiant », un composé ayant des propriétés plastifiantes, l'agent plastifiant est par exemple choisi parmi un sirop de polyol ou un hydrolysat d'amidon hydrogéné, la glycérine, la lécithine, l'eau, le monostéarate de glycérol, le distéarate de glycérol, les monoglycérides d'acides gras, le diglycéride d'acides gras, la triacétine, les monoglycérides acétylés, les esters de polyglycérol, triacétate de glycérol, les polyesters glucidiques ou leur mélange.

Par « cire » selon la présente invention, on entend une cire ou un mélange de cires. Le terme « cire » désigne une molécule linéaire non polaire à base de carbone, plus particulièrement, un ester de l'éthylène glycol et de deux acides gras ou un monoester d'acide gras et d'alcool à longues chaînes. La cire peut être d'origine naturelle, dérivée du pétrole ou d'origine synthétique. Avantageusement, la cire ou le mélange de cires comprend les cires naturelles telles que des cires végétales, minérales ou d'origine animale. On peut citer par exemple comme cire végétale, la cire de candelilla, la cire de carnauba, la cire de canne à sucre, la cire de son de riz, la cire de baie de Myrica, la cire de tournesol, le beurre de coco, le beurre de karité ou la cire du Japon. Quelques exemples de cires animales sont la cire d'abeille, la lanoline et la cire de baleine. Les cires dérivées du pétrole comprennent la cire microcristalline et la cire de paraffine. Cires synthétiques comprennent le polyéthylène et la cire de Fischer-Tropsch. Les cires minérales comprennent lignite, l'ozokérite et le cérésine. Les cires comprennent les cires totalement hydrogénées et les cires partiellement hydrogénées.

La cire ou les cires du mélange de cire présentent un point de fusion compris entre 50 et 90°C, préférentiellement entre 60 et 85°C. Avantageusement, selon l'invention, le mélange de cire comprend au moins une première cire ayant un point de fusion compris entre 60 et 65°C et au moins une seconde cire ayant un point de fusion compris entre 80 et 85°C. Avantageusement, la cire est d'origine naturelle préférentiellement comprise parmi le groupe des cires d'abeilles, de la cire de carnauba et leur mélange.

Typiquement, selon l'invention, le ratio de la première cire ayant un point de fusion compris entre 60 et 65°C sur la seconde cire ayant un point de fusion compris entre 80 et 85°C est compris entre 15/85 à 70/30, préférentiellement, de 20/80 à 55/45, entre plus préférentiellement 25/75 et 45/55 et encore plus préférentiellement 30/70 et 40/60.

Selon la présente invention, le gluten et l'agent plastifiant sont dans un rapport en masse gluten/agent plastifiant compris entre 1/3 et 2/3, préférentiellement l'agent plastifiant est la glycérine.

Typiquement, la charge minérale est sous forme pulvérulente, on peut citer les argiles et les silices. Des exemples de charges convenables sont des carbonates, des sulfates, des oxydes, des hydroxydes, des phosphates et des silicates de métaux, tels que les métaux alcalino-terreux, en particulier le calcium et le magnésium. Dans une forme de réalisation préférée, la charge est le talc, qui est un silicate de magnésium. Dans une autre forme de réalisation préférée, la charge est du carbonate de calcium. La craie ou le phosphate dicalcique sont également des charges minérales très appropriées. La charge peut consister en un seul composant ou en variante, elle peut comprendre un mélange de deux ou plusieurs des charges convenables précités.

Avantageusement, lorsque la charge minérale est le talc, la gomme base selon l'invention comprend 0.1 à 15% en masse de talc, préférentiellement de 5 à 12%.

Avantageusement, lorsque la charge minérale est le carbonate de calcium, la gomme base selon l'invention comprend 0.1 à 8% en masse de CaCO3, préférentiellement de 3 à 6%.

Typiquement, la gomme base selon l'invention peut comprendre en outre un agent sucrant.

L'invention concerne en outre, un procédé d'obtention d'une gomme base, caractérisé en ce qu'il comprend :
- une étape de chauffage de 30 à 70% en masse d'un élastomère à une température comprise entre 30 et 45°C,
- une étape d'addition de 1 à 20% en masse d'un gluten de blé vital,
- une étape d'addition de 1 à 20% en masse d'un agent plastifiant, typiquement ledit agent plastifiant est ajouté au gluten avant incorporation dans la composition,
- une étape d'addition de 5 à 25% en masse d'au moins une cire ayant un point de fusion compris entre 50 et 90°C, préférentiellement entre 60 et 85°C, et
- une étape d'addition de 0.1 à 25% de charges minérales.

Typiquement, le mélange est préparé dans un mélangeur tel que par exemple du type Z-blender de Winkworth. Préférentiellement, le mélangeur comprend une double enveloppe maintenue à une température inférieure à 45°C, par exemple à 35°C. La vitesse de rotation du mélangeur est avantageusement de 40 rotation par minute (rpm). Les ingrédients sont ajoutés selon le protocole suivant :
- 1) préchauffage-mélange des élastomères typiquement, pendant 1 minute ;
- 2) ajout de l'agent plastifiant préférentiellement de la glycérine, et ajout du gluten, préférentiellement, le mélange est agité pendant 2 minutes ;
- 3) ajout de la charge minérale tel que le talc et/ou le carbonate de calcium, préférentiellement, le mélange est agité pendant 2 minutes ;
- 4) ajout des cires typiquement, d'abeille et/ou de carnauba, préférentiellement, le mélange est agité pendant 5 minutes.

L'invention concerne également un chewing-gum comprenant :
- 20 à 40% en masse de la gomme base selon l'invention,
- 2 à 15% en masse d'un agent plastifiant, préférentiellement 3 à 12%, typiquement un sirop et notamment un sirop de polyol par exemple un sirop de maltitol,
- 20 à 60% en masse d'agent sucrant tel que du sorbitol pulvérulent ou du maltitol pulvérulent ou un mélange de polyols pulvérulents,
- 0,5 à 10% en masse de d'arôme, sous forme liquide et pulvérulent ou encapsulé,
- 0 à 0,5% d'au moins un édulcorant intense typiquement choisi parmi le sucralose, l'acesulfame de potassium, l'aspartame, et leur mélange,
- 0 et 1% en masse d'un colorant (par exemple, le dioxyde de titane),
- optionnellement, de 0,5 à 10% en masse d'un arome,
ledit chewing-gum ayant une teneur en eau inférieure à 5% préférentiellement comprise entre 0 et 2,5%.

Par « *chewing-gum* » ou « *gomme à mâcher* » on entend, une composition comprenant une partie insoluble dans l'eau ou la salive constituée par la gomme base et une partie soluble comprenant notamment un agent sucrant, un agent plastifiant, un additif et/ou un arôme. Plus particulièrement, par gomme à mâcher on entend, une composition comprenant une gomme base, un agent sucrant, au moins un agent plastifiant, et au moins un arôme.

Différentes formules de gommes à mâcher ainsi que leur mode d'obtention sont largement décrits dans l'art antérieur et notamment dans «Formulation and Production of Chewing and Bubble Gum » par Fritz, Douglas p.142. De façon générale, les gommes à mâcher sont obtenues par une adjonction séquentielle des différents ingrédients du chewing-gum (-15-20 minutes) dans un malaxeur du marché bien connu de l'homme du métier, par exemple un malaxeur double enveloppe permettant un contrôle fin de la température de sorte à permettre un assouplissement de la gomme base et une régulation de la température de la masse de chewing-gum par exemple à 50°C durant le procédé d'obtention de la gomme à mâcher.

On entend *par « agent* sucrant », un édulcorant tel que le D-Glucose, le saccharose, les polyols ou leur mélange. Le(s) polyol(s) (ou sucre-alcool) est préférentiellement choisi parmi le sorbitol, le maltitol, l'érythritol, l'isomalt, le xylitol, le mannitol et leur mélange. Avantageusement, un mélange de polyols tel que le sorbitol et le xylitol, le sorbitol et le maltitol ou le sorbitol et le mannitol. Le polyol est avantageusement, le sorbitol seul ou en combinaison avec le maltitol et/ou le xylitol. L'agent sucrant est typiquement sous une forme pulvérulente. Les agents sucrants incluent également le polydextrose; le raftilose; la raftiline; les fructooligosaccharides (ex : NutraFlora®); le palatinose; les hydrolysats de gum Guar (ex : Sun Fiber®); et/ou les dextrines indigestibles (ex :Fibersol®, Nutriose®). L'agent sucrant peut comprendre en outre un édulcorant tel qu'un édulcorant intense notamment choisi parmi l'extrait de stevia (rebaudioside), l'aspartame, l'acésulfame de potassium, la thaumatine, la saccharine, le cyclamate, le sucralose ou leur mélange. Typiquement, les édulcorants intenses préférés sont l'aspartame, le sucralose et l'acésulfame de potassium.

Préférentiellement, la gomme à mâcher est sans sucre.

On entend par « arôme » des agents aromatisants naturels ou artificiels. Les arômes ou agents aromatisants peuvent comprendre des huiles essentielles, des extraits naturels, des arômes synthétiques ou des mélanges de ceux-ci, y compris, mais sans s'y limiter, les huiles dérivées de plantes et de fruits telles que les huiles d'agrumes, essences de fruits, essence de menthe poivrée, essence de menthe verte, d'autres huiles de menthe, l'essence de girofle, l'huile de wintergreen, l'anis et autres. Lorsque l'arôme utilisé est artificiel, il peut être par exemple un composant sensorielle qui donnent une sensation de picotement ou une perception thermique lors de la mastication, comme un effet de refroidissement ou de chauffage. De tels composants comprennent les amides d'acides carboxyliques cycliques et acycliques, le menthol et des dérivés de menthol tel que des esters de menthyle d'acides acceptables comme additif alimentaire, et la capsaïcine, entre autres. Des acidulants peuvent être inclus pour donner goût acidulé et renforcer la perception des arômes fruités.

Les arômes ou agents aromatisants peuvent être utilisés en des quantités d'environ 0,1% en poids à environ 15% en poids du chewing-gum, et de préférence, d'environ 0,2% en poids à environ 5% en poids. Typiquement, les arômes ou agents aromatisants sont sous forme liquide et ou pulvérulente.

Typiquement, le chewing-gum selon l'invention présente une teneur en plastifiant de 3 à 15% en masse d'un agent plastifiant, typiquement le chewing-gum comprend un mélange d'agents plastifiants. Parmi les agents plastifiants connus, les agents plastifiants préférés sont choisis parmi la glycérine, le propylène glycol, les sirops de polyol, la lécithine et leur mélange.

Avantageusement, le chewing-gum comprend de 3 à 15% en masse de sirop et notamment de sirop de polyol par exemple un sirop de maltitol de 70 et 85% de matière sèche et comprenant 50 à 60% de maltitol en masse de matière sèche ou un sirop de sorbitol de 65 et 75% de matière sèche et comprenant 70 et 85% de sorbitol en masse de matière sèche. Un exemple particulièrement avantageux de sirop de maltitol est le sirop MALTILITE®5580 commercialisé par la demanderesse. Typiquement, le chewing-gum comprend en outre entre 0,01 et 2% en masse de lécithine, préférentiellement entre 0,1 et 1.5%, encore plus préférentiellement entre 0,2 et 1%. Avantageusement, le chewing-gum comprend en outre de 0,2 à 10% en masse de glycérine, préférentiellement 0,5 à 8%, plus préférentiellement 1 à 6%, encore plus préférentiellement, de 2 à 5%. Avantageusement, ledit chewing-gum présente un rapport en masse gluten/agent plastifiant et plus particulièrement gluten/glycérine compris entre 25/75 et 55/45.

Avantageusement, le chewing-gum présente en outre 0 à 10% de charge minérale, plus particulièrement, 0 à 7% de talc et/ou 0 à 5% de CaCO3.

Typiquement, le chewing-gum selon l'invention présente une couche de dragée.

L'invention concerne en outre, un procédé d'obtention d'un chewing-gum, caractérisé en ce qu'il comprend :
- une étape de fourniture d'une gomme base selon l'invention ou la mise en œuvre d'une méthode d'obtention d'une gomme base selon l'invention,
- une étape de mélange de 20 à 40% en masse de ladite gomme base avec 3 à 15% en masse d'un agent plastifiant typiquement d'un sirop, de 20 à 60% en masse d'un agent sucrant, de 0 à 0,5% d'au moins un édulcorant intense et optionnellement, de 0,5 à 15% préférentiellement, de 0,5 à 10% en masse d'un arome et/ou de 0 et 1% en masse d'un colorant.

Typiquement, l'étape de mélange s'effectue à une température comprise entre 30 et 45°C.

On notera que dans les procédés classiques d'obtention du chewing-gum de l'art antérieur, l'étape de mélange s'effectue à des températures dépassant 45°C. De telles températures entraînant une dénaturation du gluten ont comme effet de réduire l'élasticité de la gomme base de l'invention.

Optionnellement, ledit procédé peut comprendre une étape de dragéification, précédée le cas échéant, d'une étape de gommage.

D'autres caractéristiques, aspects, objets et avantages de la présente invention apparaîtront encore plus clairement à la lecture de la description et des exemples qui suivent.

### FIGURES

**Figure 1** : Evaluation par DMTA des caractéristiques rhéologiques d'une gomme base DREYCO®
**Figure 2** : Comparaison des températures des pics du module d'élasticité E' et du facteur de perte Tan δ des gommes bases

### Exemples

### Exemple 1 Etablissement de recettes de chewing-gums comprenant du gluten

Différentes recettes de chewing-gum ont été mises au point afin de réduire une partie de la gomme synthétique du chewing-gum par du gluten de blé vital de sorte à augmenter le pourcentage de produit biodégradable dans les compositions de chewing-gums (voir tableau 1).

**Tableau 1 : Recettes de gomme-bases dont une partie de la gomme synthétique a été remplacée par du gluten**

| Ingrédients | recette A' (% en masse) | recette B' (% en masse | recette C' (% en masse | recette D' (% en masse |
|---|---|---|---|---|
| gomme base synthétique | 61,73 | 58,13 | 47,14 | 50,65 |
| Gluten de blé vital (AMYGLUTEN®) | 3,23 | 5,87 | 14,06 | 11,23 |
| Glycérine | 1,62 | 2,93 | 7,03 | 5,74 |
| Cire d'abeilles (Stearinerie Dubois) | 5,392 | 5,33 | 4,95 | 5,22 |
| Cire de Carnauba (NATUROCHIM) | 10,782 | 10,67 | 10,42 | 10,44 |
| Talc | 12,13 | 12 | 11,46 | 11,75 |
| Carbonate de calcium | 5,12 | 5,07 | 4,95 | 4,96 |

Les recettes complètes sont exposées dans la tableau 2. Les ingrédients en gras représentent la recette de la gomme base, les autres ingrédients étant ceux du chewing-gum.

Afin de mettre en place une recette de chewing-gum ayant des caractéristiques sensorielles plus proches des chewing-gums du marché, les gommes bases synthétiques utilisées sont celles décrites dans l'exemple 2

**Tableau 2 Recettes de chewing-gum dont une partie de la gomme synthétique a été remplacée par du gluten**

| *Ingrédients* | *recette A (% en masse)* | *recette B (% en masse* | *recette C (% en masse* | *recette D (% en masse* |
|---|---|---|---|---|
| **gomme base synthétique** | **22,9** | **21,8** | **18,1** | **19,4** |
| **Gluten de blé vital (AMYGLUTEN®)** | **1,2** | **2,2** | **5,4** | **4,3** |
| **Glycérine** | **0,6** | **1,1** | **2,7** | **2,2** |
| **Cire d'abeilles (Stearinerie Dubois)** | **2** | **2** | **1,9** | **2** |
| **Cire de Carnauba (Naturochim)** | **4** | **4** | **4** | **4** |
| **Talc** | **4,5** | **4,5** | **4,4** | **4,5** |
| **Carbonate de calcium** | **1,9** | **1,9** | **1,9** | **1,9** |
| Sorbitol pulvérulent MERISORB®200 | 42,6 | 42,4 | 41,7 | 41,9 |
| Maltltitol pulvérulent MALTILITE®P200 | 6,4 | 6,4 | 6,3 | 6,3 |
| Sirop de Maltitol MALTILITE®5580 | 5,6 | 5,5 | 5,5 | 5,5 |
| Glycérine | 2,4 | 2,4 | 2,3 | *2,3* |
| Lécithine de soja | 0,9 | 0,9 | 0,9 | 0,9 |
| Sucralose | 0,05 | 0,05 | 0,05 | 0,05 |
| Acesulfame K | 0,1 | 0,1 | 0,1 | 0,1 |
| Arome poudre | 2,4 | 2,4 | 2,3 | 2,3 |
| Arome liquide | 2,4 | 2,4 | 2,3 | 2,3 |
| Dioxyde de titane | 0,1 | 0,1 | 0,1 | 0,1 |

### Essais sur le taux d'incorporation du gluten

Le gluten est une protéine disposant de propriétés visco-élastiques très intéressantes. Toutefois sa viscoélasticité est moindre comparativement aux élastomères couramment employés dans la formulation des gommes bases du marché. Par conséquent, il peut en résulter une texture de chewing-gum significativement plus tendre après quelques secondes de mastication, voire même déliquescente, en fonction de niveau d'incorporation. Ainsi, au-delà de 20% en masse de gluten dans la gomme base les inventeurs ont observé une déliquescence de la gomme base obtenue après 1 à 3 minutes de mastication ce qui n'a pas permis de valider ce mélange.

Lorsque le taux d'incorporation de gluten dans la gomme base est compris entre 0% et 10%, les tests sensoriels ont montré qu'un taux d'incorporation inférieur ou égal à 4,3% permet l'obtention d'un chewing-gum comparable aux produits habituellement commercialisés, tandis qu'un taux supérieur produit un chewing-gum toujours tout à fait présentable et consommable mais toutefois un peu moins proche des produits habituels en termes de texture.

### Essais taux de glycérine, ratio glycérine/gluten

Les inventeurs ont constaté que le taux de glycérine à ajouter au mélange et notamment le ratio gluten/glycérine est important afin d'obtenir une masse homogène pouvant être mélangée avec facilité avec les autres composants et permettant l'obtention d'un chewing-gum dans de bonnes conditions.

Le ratio de glycérine dans la gomme base permet également une hydratation du gluten et l'acquisition d'une structure souple.

Une telle hydratation confère à la gomme base une structure lisse en bouche qui n'est pas observée par l'ajout d'eau.

Après de nombreux essais, les inventeurs ont constaté que la température de mélange réduite en deçà de 45°C permet de conserver les propriétés élastiques de la masse. Ceci passe par l'abaissement de la température de la double enveloppe du malaxeur. Les inventeurs ont montré qu'une température de 35°C au lieu de 50°C dans le cadre d'un procédé classique d'obtention de chewing-gum était particulièrement avantageuse. En outre, une température de plus de 30°C appliquée durant le mélange permet d'améliorer le mélange des matières et procure les propriétés d'élasticité recherchées au niveau du gluten.

### Essais sur le choix des cires ou matières grasses et le taux de cire

Les inventeurs ont montré qu'une texture finale comparable à celle d'un chewing-gum du marché ne peut être obtenue sans l'adjonction de cire. Plus particulièrement, les inventeurs ont démontré qu'une quantité de moins de 5% de cire dans la gomme base est insuffisante pour conférer une texture comparable à celle d'un chewing-gum du marché. En outre, les essais ont montré qu'au-delà de 25% de cire, une augmentation significative de la fermeté du chewing-gum obtenu est constatée ainsi qu'une diminution de son élasticité. De plus, lors de la mise en œuvre du procédé, de telles compositions montrent une texture cassante entravant les étapes de laminage et de découpe du chewing-gum. Les cires naturelles ont été préférées. Les cires procurent une meilleure cohésion d'ensemble à la formule et ainsi réduit le risque de délitement. Ces cires sont sélectionnées avec un point de fusion très élevé pour également compenser la perte de fermeté liée à l'introduction de gluten. Les différentes cires ou matières grasses à haut point de fusion utilisés ont les points de fusion suivants :
- cire de candelilla 70°C,
- cire de carnauba 85°C
- cire de son de riz (E908) 78°C
- cire d'abeille 65°C
- Dibehenate de glycérol 70°C
- Stéarine TP1200 69,6°C

Des essais ont été effectués sur différentes cires. Les premiers essais montrent que la présence de cire améliore nettement la texture de la gomme base comparativement à l'absence de cire. Néanmoins, certaines gommes bases se distinguent par leurs caractéristiques nettement améliorées. Seuls les meilleures gommes bases ont été utilisées pour la fabrication de chewing-gums et évaluées par analyse sensorielle.

L'évaluation sensorielle des chewing-gums a fait l'objet d'un protocole strict mis en œuvre par un panel spécifiquement entraîné pour la dégustation des chewing-gums. Le protocole de dégustation de chewing-gums est documenté, il est plus particulièrement décrit dans « Formulation and production of chewing and bubble gum » de Douglas Fritz (Kennedys Books Ltd) - Hardcover (2008*).* Ce protocole s'organise en 3 phases.

La phase initiale correspond à l'attaque en bouche pendant les 10 premières secondes de dégustation; la phase intermédiaire jusqu'à 3 minutes, décrit précisément les propriétés sensorielles du chewing-gum en terme d'hydratation, de texture et de perception aromatique car c'est pendant cette période que la plupart des arômes et édulcorants sont extraits de la matrice. La phase finale au-delà de 3 minutes, caractérise le degré de stabilité des propriétés du chewing-gum dans le temps, en termes de consistance et perception aromatique principalement.

Les paramètres organoleptiques ont été évalués par un panel entraîné, composé de 9 personnes.

**Tableau 3**

| **Cire** | **Processabilité** | **Tests sensoriels** |
|---|---|---|
| Cire de candelilla | Non collant Poisseux Structure du mélange obtenu non homogène sec, non souple, perte d'élasticité | Non testé car mélange non suffisamment homogène |
| Cire de son de riz (E908) | Souplesse mais pas d'élasticité Mélange non homogène | Non testé car mélange non suffisamment homogène |
| cire de carnauba en pailettes | Mélange relativement homogène | Sensation de non homogénéité en bouche Très sec à l'attaque et croustillant |
| cire de carnauba pulvérulente | Mélange relativement souple et élastique , | Bonne attaque, Ne se délite pas en bouche Léger rétrécissement en bouche |
| cire de carnauba 1% cire d'abeille 2% | Comportement au cours du mélange proche de celui d'un CG standard sans gluten | Texture proche d'un CG sans gluten Ne se délite pas Conserve une fermeté jusqu'au bout de la dégustation |
| dibehenate de glycérol atomisé | Relative élasticité et sécheresse | Bonne fermeté à l'attaque Délitement rapide |
| Stearine TP1200 poudre | Sec à la découpe Casse facile | Bonne fermeté à l'attaque Colle aux dents puis se délite |

Au cours de la phase initiale (10 premières secondes) sont évaluées, la dureté d'attaque, la cohésion, la vitesse de perception et l'intensité aromatique. Au cours de la phase intermédiaire (10 secondes à 3 minutes) sont évalués, l'hydratation (temps mis par la matrice pour absorber la salive), la cohésion, la texture (lisse à granuleuse), l'effet collant sur les dents, la puissance aromatique, l'intensité sucrée, et le pouvoir rafraichissant. Enfin, lors de la phase finale (3 à 6 minutes), sont évalués la dureté, la texture, le collant aux dents, la taille du chewing-gum en bouche, la forme en bouche (entre deux mastications), la consistance et la largeur du fil lorsque le chewing-gum est étendu. Le système d'évaluation utilise un système à 5 points correspondant à cinq grades ou score pour chacun des descripteurs. L'ensemble des paramètres définis ci-dessus ont été testés (phase initiale, phase intermédiaire et finale). Les scores et l'ensemble des paramètres testés sont décrits dans le tableau 3 ci-dessus.

Au terme de ces essais, on remarque que l'ajout de cire d'abeille, utilisée seule, procure souplesse et liant au chewing-gum final. Toutefois le chewing-gum ramollit puis se délite rapidement en bouche.

L'ajout de cire de carnauba, utilisée seule, apporte de la fermeté au chewing-gum final et permet ainsi d'éviter le délitement. Toutefois la taille du chewing-gum en bouche rétrécit rapidement.

La combinaison de la cire d'abeille et de la cire de carnauba permet l'amélioration de la processabilité et des propriétés sensorielles en apportant la juste fermeté en bouche et en évitant le délitement au cours de la mastication.

Un ratio de 33/66 cire de carnauba / cire d'abeille permet d'obtenir un chewing-gum de texture convenable, ni trop molle ni trop ferme, améliorée par rapport à l'utilisation de l'une ou de l'autre seule, même si le chewing-gum n'a pas encore une texture identique à celle d'un chewing-gum classique sans gluten. Un ratio 66/33 cire de carnauba / cire d'abeille permet d'obtenir les propriétés mécaniques recherchées en terme d'analyses DMTA avec une température au pic du facteur de perte tan delta compris entre 33 et 45°C. La ratio 66/33 cire de carnauba / cire d'abeille procure une processabilité proche d'un chewing-gum classique en terme de souplesse, de collant et d'homogénéité dans le mélangeur, ainsi que des propriétés sensorielles adéquates en apportant flexibilité et fermeté tout au long de la mastication tout en maintenant une texture lisse en bouche.

### Talc et carbonate de calcium

Les inventeurs ont constaté que le carbonate de calcium est plus efficace que le talc en termes d'apport de fermeté. Toutefois le carbonate de calcium procure un produit fini avec des propriétés sensorielles moins agréables en bouche. Les essais ont permis de montré que la combinaison carbonate de calcium et du talc conférait des meilleurs caractéristiques que l'un ou l'autre de ces produits séparément.

Néanmoins, un taux supérieur à 2% pour le carbonate de calcium conduit à l'obtention d'un chewing-gum trop poudreux/ sableux en bouche et 7% de talc , qui induit également une masse trop sèche rendant l'étape de laminage très difficile.

### Exemple 2 : Sélection des gommes bases

### Caractéristiques de dureté de la gomme base

Un grand nombre de gommes bases du marché ont été utilisées en mélange avec le gluten afin de déterminer la ou les gommes permettant un remplacement partiel avec du gluten.

Différentes gomme-bases ont été analysées seules ou dans les compositions de l'invention afin de mieux caractériser et comparer ces gommes bases avec celles de l'invention.

Les gommes bases testées sont les gommes DREYCO®, GEMINIS® et EXCEL® du producteur CAFOSA.

L'élasticité des gommes bases utilisées a été analysée par la technique de DMTA (Dynamic Mechanical Thermal Analysis, équipement TRITEC 2000 commercialisé par TRITON Technology Ltd) . Plus particulièrement, l'équipement DMTA est utilisé en mode flexion par simple levier (Single Cantilever bending). L'échantillon est placé entre deux mors de fixation et subit des stress mécaniques de vibration sinusoïdales permettant la mesure des propriétés mécaniques de l'échantillon.

Les échantillons de gomme base sont préparés selon les dimensions suivantes : largeur comprise entre 12, à et 12,7mm, épaisseur comprise entre 3,2 et 4,5 mm, distance entre les mors comprise entre 5,0 et 5,5mm.

Chaque série de tests est opérée selon un protocole identique : montée en température de -100°C à +100°C, selon une rampe de température de 2°C par minute, un déplacement de 0,05 mm et une fréquence de 1Hz. Ces paramètres nécessitent un refroidissement renforcé grâce à de l'azote liquide, de manière à couvrir la plage de température débutant à -100°C.

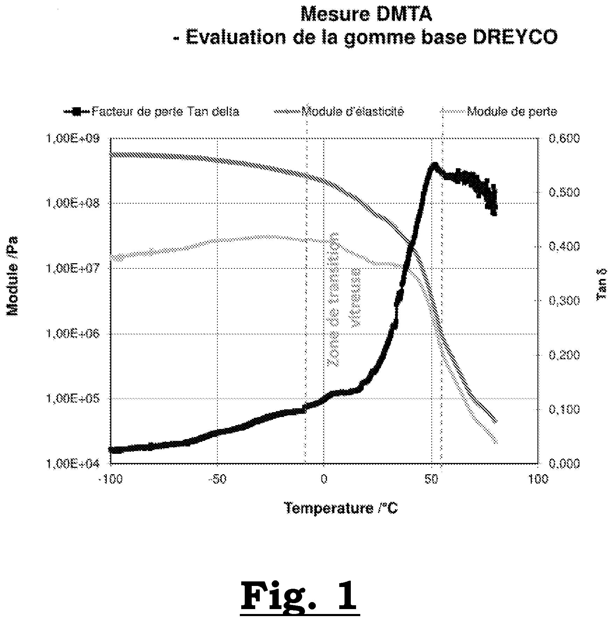

Cette technique permet une évaluation des caractéristiques rhéologiques de la gomme base notamment (figure 1)
- le module d'élasticité (E') correspondant aux caractéristiques élastiques de la gomme
- le module de perte (E") correspondant aux caractéristiques visqueuses de la gomme
- le facteur de perte tan δ renseignant sur les propriétés viscoélastiques de la gomme

La phase de transition vitreuse est une caractéristique qui détermine la texture de la gomme et par conséquent du chewing-gum final. Cette phase de transition vitreuse se caractérise par une chute brutale des valeurs du module d'élasticité, correspondant aussi à une chute du module de perte, et à un pic du facteur de perte tan δ.

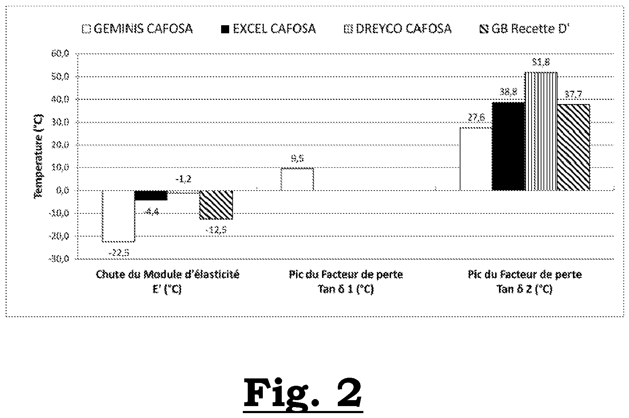

L'analyse est répétée à l'identique sur plusieurs gommes bases synthétiques du marché ainsi que sur la gomme base de l'invention. Les résultats obtenus sont indiqués sur le graphique de la figure 2. Les valeurs importantes sont également compilées sous forme synthétique dans le graphique (figure 2).

Trois groupes sont clairement identifiables par comparaison notamment du module d'élasticité E' et du facteur de perte Tan δ. Le principe de la mesure par DMTA est de soumettre le matériau gomme base à une contrainte mécanique, sous l'influence d'une rampe de température croissante. L'analyse mécanique dynamique soumet l'échantillon à une force oscillante et mesure l'amplitude du déplacement en résultant.

Une gomme dure sera caractérisée par une chute du module d'élasticité tardive, c'est-à-dire correspondant à une température plus élevée , ainsi qu'un pic du facteur de perte Tan δ apparaissant à une température plus élevée.

Les résultats montrent que la gomme DREYCO® du producteur CAFOSA présente des caractéristiques de dureté très élevées avec une chute de E' à -1,2°C et un pic Tan δ à 51,8°C.

A l'opposé, la gomme GEMINIS® du producteur CAFOSA présente une très faible dureté qui est caractérisée par un module d'élasticité E' déclinant le premier avec un point d'infléchissement à -22,5°C et deux pics Tan δ à 9,5°C et à 27,6°C.

Ces gommes bases ont été testées seules ou en mélange dans les recettes de gomme base du tableau 1 et dans les recettes de chewing-gum du tableau 2.

Des tests sensoriels ont montrés que les gommes DREYCO® et GEMINIS® du producteur CAFOSA n'étaient pas les meilleures pour obtenir un chewing-gum comprenant du gluten avec de bonnes caractéristiques.

Les essais ont montré que la gomme base tendre GEMINIS® confère au chewing-gum obtenu une texture molle et déliquescente, ce qui engendre un chewing-gum peu masticable.

L'utilisation d'une gomme base très dure DREYCO® permet de renforcer la dureté à l'attaque. Toutefois les propriétés d'élasticité lors de la mastication prolongée restent trop faibles. Le chewing-gum ainsi obtenu présente donc une texture trop dure et trop peu élastique, comparativement aux produits du marché.

La combinaison d'une gomme base très dure avec une autre gomme base de faible dureté permet d'optimiser le profil de texture, avec une dureté d'attaque suffisamment ferme combinée à une bonne masticabilité. Ainsi, un mélange de 50% de gomme base GEMINIS® (faible dureté) et de 50% de gomme base DREYCO® (haute dureté) a été testé dans la recette D' de l'exemple 1 et a montré les meilleurs résultats. Les caractéristiques de cette gomme base selon l'invention et notamment sous la forme de la recette D' ont été mesurées par DMTA.

L'analyse du profil observé en DMTA montre que les gommes EXCEL® du producteur CAFOSA ainsi que la gomme de la recette D' présentent respectivement des caractéristiques de dureté intermédiaires avec une chute de E' à -4,4°C et -12,5°C et un pic Tan δ à 38,8°C et 37,7°C. La gomme de la recette D' selon l'invention est donc comparable en terme de propriétés mécaniques à une gomme de dureté intermédiaire la plus couramment employée dans l'industrie du chewing-gum. Elle permettra d'apporter au chewing-gum les propriétés sensorielles recherchées lors de la mastication, en terme de dureté à l'attaque et pendant toute la mastication du chewing-gum.

La recette D' permet également une meilleure mise en œuvre de la gomme notamment lors de l'étape de découpe des chewing-gums en dragées ou en tablettes qui est grandement facilitée et tout à fait comparable à celle d'un chewing-gum classique.

### Exemple 3

Afin d'améliorer la recette de chewing-gum comprenant du gluten, des essais ont été effectués afin de déterminer de potentiels effets de texturants ou d'émulsifiants sur la durabilité ou la dureté de la composition obtenue.

### Essais de texturants

Différents texturants ont été évalués afin de déterminer leurs effets sur la dureté et la durabilité des chewing-gums de gluten obtenus comparativement aux chewing-gums conventionnels.

Aucun des texturants classiquement utilisés n'a montré de quelconque effet sur la stabilité de la composition du chewing-gum. Certains ont montré des effets positifs soit sur la processabilité de la composition soit au niveau des caractéristiques sensorielles du chewing-gum obtenu mais aucun n'a montré un avantage notable. Certains ont montré des effets négatifs quant aux caractéristiques sensorielles du produit obtenu.

Afin d'améliorer la texture du chewing-gum obtenu, l'adjonction de maltodextrines a été testé en remplacement d'une portion du sirop de sorbitol. Ceci n'a pas permis d'améliorer la texture du chewing-gum obtenu.

**Tableau 4**

| **Texturants** | **Processabilité** | **Tests sensoriels** |
|---|---|---|
| **gomme de guar** | Mélange très sec Problèmes de mélange après ajout de l'arôme sous forme poudre Problème de découpe de la gomme en coussinets | Pas d'effet notable comparativement au chewing-gum sans gomme de guar |
| **Xanthane** | Amélioration de la souplesse de la pâte Problème de découpage en coussinet | Attaque raffermie Limitation du rétrécissement de la gomme durant le test |
| **gelatine 250 bloom** | Amélioration de la souplesse de la pâte Amélioration des conditions de coupe en coussinet | Présence de particules croustillantes désagréables |
| **gomme arabique** | Amélioration de la souplesse de la pate Très facile à découpé en coussinet | Chewing-gum plus sec et moins cohésif |
| **(accacia+xanthane) Thixogum S** | Comparable au xanthane seul | Déliquescence du chewing-gum rapide lors de l'essai |

### Taux de lécithine

Des essais avec différents taux de lécithine ont été effectués. L'analyse des résultats obtenus a permis de montrer qu'un taux de lécithine compris entre 0,2 et 1% permettait d'observer une amélioration de la souplesse de la gomme et de sa processabilité. Les chewing-gums ainsi obtenus ont montrés une texture finale plus cohésive, plus proche d'un chewing-gum conventionnel.

### Exemple 4

### Mise en place du procédé d'obtention du chewing-gum comprenant du gluten

Afin d'améliorer les caractéristiques du chewing-gum selon l'invention, le procédé d'obtention de ce dernier a été évalué afin d'adapter les procédés classiques utilisés pour les chewing-gums de gomme base synthétique aux chewing-gums comprenant du gluten.

La gomme base est obtenue par mélange des composés présentés dans le tableau ci-dessous dans un Z-Blender double Z (SIGMA) avec une température de la double enveloppe à 35°C et une vitesse de rotation de 40 rpm

Concernant la **température de la double enveloppe,** les inventeurs ont constaté qu'une température élevée réduisait les propriétés viscoélastiques du gluten. Ainsi, une température de mélange inférieure à 45°C est préférée. Les inventeurs ont montré que la température optimale de la double enveloppe du malaxeur était de 35°C.

**Tableau 5**

| **Etape** | **Temps de mélange** |
|---|---|
| *Mélange des gommes jusqu'à l'obtention d'une masse homogène* | *0' - 1'00* |
| *Ajout de glycérine et du gluten* | *1'00* - *3'00* |
| *Ajout du talc et du carbonate de calcium* | *3'00* - *5'00* |
| *Ajout des cires* | *5'00* - *10'00* |
| Sorbitol pulvérulent MERISORB®200 1/3 + (sirop de maltitol : MALTILITE® 5580 + TIO2 dispersé) | 10'00 - 13'00 |
| Sorbitol pulvérulent MERISORB®200 2/9 | 13'00 - 14'00 |
| Maltitol MALTILITE® P200 | 14'00 - 15'00 |
| Glycérine + Lécithine de soja | 15'00 - 16'30 |
| Sorbitol pulvérulent MERISORB®200 (2/9) + édulcorants (sucralose + Ace K) | 16'30 - 18'00 |
| Arôme liquide | 18'00 - 19'00 |
| Sorbitol pulvérulent MERISORB®200 (2/9) | 19'00 - 20'00 |
| Xylitol | 20'00 - 21'00 |
| Arôme poudre | 21'00 - 23'00 |

Le procédé mis en place par les inventeurs a permis d'obtenir un chewing-gum présentant des qualités gustatives améliorées.

Le procédé de fabrication a été développé de façon à être le plus proche possible d'un procédé de chewing-gum classique formulé à partir de gomme base synthétique. L'équipement nécessaire est donc strictement le même (mélangeur Z-blender de Winkworth) tout comme le mode d'incorporation des ingrédients. Seule la température de la double enveloppe doit être abaissée. Ainsi, la recette de l'invention est adaptable aux lignes de productions des chewing-gums actuels du marché.

### Draaéification

Une étape de gommage a été prévue pour une partie des coussinets de chewing-gum. Cette étape est effectuée à partir d'une solution de gomme arabique. Cette étape est connue de l'homme du métier dans la production de chewing-gum classiques.

Les résultats ont montré que seuls les coussinets ayant préalablement subit une étape de gommage ont montrés une bonne stabilité. Ainsi, l'étape de gommage permet l'évitement de la migration des corps gras et en l'occurrence des cires du cœur vers la couche dragéifiée. Un tel gommage est très courant dans l'industrie des chewing-gums de manière à conserver une dragée stable, sans tâches apparentes jusqu'à la fin de la durée de vie des produits.

### Exemple 5 Caractérisation du chewing-gum.

### Teneur en eau & activité de l'eau

Les chewing-gums avec un taux de gluten de 4,3% sont obtenus selon la recette D du tableau 2 . La teneur en eau des chewing-gums selon l'invention a été évaluée. On observe des Aw équivalentes entre les chewing-gums selon l'invention et les chewing-gums à base de résine synthétique uniquement. Ceci est indicateur que le chewing-gum selon l'invention a une stabilité identique aux chewing-gums du marché.

**Tableau 6**

| ***Recette*** | ***aw*** |
|---|---|
| *Chewing-gum avec 100% gomme base synthétique* | *0,40* |
| *Chewing-gum selon l'invention selon recette D* | *0,38* |

### Exemple 6 Dégradabilité

### Test de désintégration dans l'eau :

Les tests de dégradabilité ont été mise en œuvre sur les chewing-gums obtenu selon la recette D

Les tests de dégradabilité ont été effectués après mastication d'un coussinet de chewing-gum non dragéifié pendant une minute puis dépôt du chewing-gum dans un bêcher contenant de l'eau déminéralisée. Le tout est mis sous agitation pendant 16h.

L'eau est ensuite filtrée puis les éléments retenus sur le filtre sont séchés puis pesés, après 16h dans l'eau sous agitation.

La dégradabilité est évaluée par la perte de poids du chewing-gum avant mastication et après séchage dans le tableau ci-dessous.

Le test est reproduit deux fois avec des testeurs différents.

### Résultats

**Tableau 7**

| | *CG 100% gomme base synthétique* (poids initial/poids final) | *CG selon recette D* (poids initial/poids final) |
|---|---|---|
| *Essai 1* | *73%* | *40%* |
| *Essai 2* | *71%* | *44%* |

Les résultats montrent clairement une amélioration de 55 à 62% de la dégradabilité du CG selon l'invention comparativement aux chewing-gums dont la gomme base est uniquement synthétique.

## Revendications

1. Gomme base comprenant
- 30 à 70% en masse d'un élastomère,
- 1 à 20% en masse de gluten de blé,
- 1 à 20% en masse d'agent plastifiant,
- 5 à 25% en masse de cire, ladite cire ayant un point de fusion compris entre 50 et 90°C, et
- 0.1 à 25% en masse de charge minérale.

2. Gomme base selon la revendication 1 **caractérisée en ce qu'**elle comprend 40 à 60% d'élastomère.

3. Gomme base selon la revendication 1 ou 2 **caractérisée en ce que** la charge minérale est sous forme pulvérulente.

4. Gomme base selon l'une quelconque des revendications 1 à 3 **caractérisée en ce que** l'agent plastifiant est la glycérine et **en ce que** le rapport en masse gluten/glycérine est compris entre 1/3 et 2/3.

5. Gomme base selon l'une quelconque des revendications 1 à 4 **caractérisée en ce que** la dite cire est un mélange de cires.

6. Gomme base selon la revendication 5, **caractérisée en ce que** le mélange compris d'au moins une première cire ayant un point de fusion compris entre 60 et 65°C et au moins une seconde cire ayant un point de fusion compris entre 80 et 85°C.

7. Gomme base selon l'une quelconque des revendications 1 à 6 **caractérisée en ce qu'**elle présente une température au pic du facteur de perte tan delta compris entre 33 et 45°C et/ou une chute du module d'élasticité dynamique E' compris entre -2 et -20°C.

8. Gomme base selon l'une quelconque des revendications 1 à 7**caractérisée en ce qu'**elle comprend un mélange
- d'un élastomère présentant une température au pic du facteur de perte tan delta supérieur à 45°C et/ou chute du module d'élasticité dynamique E' supérieur à -22°C et
- d'un élastomère présentant une température au pic du facteur de perte tan delta inférieur à 33°C et/ou une chute du module d'élasticité dynamique E' inférieur à -1,2°C.

9. Gomme base selon l'une quelconque des revendications 1 à 8 **caractérisée en ce que** ladite cire est d'origine naturelle, préférentiellement des cires végétales, minérales et/ou d'origine animale, typiquement, la cire végétale est choisie parmi la cire de candelilla, la cire de carnauba, la cire de canne à sucre, la cire de son de riz, la cire de baie de Myrica, la cire de tournesol, le beurre de coco, le beurre de karité ou la cire du Japon et la cire animale est choisie parmi la cire d'abeille, la lanoline et la cire de baleine.

10. Chewing-gum comprenant :
- 20 à 40% en masse d'une gomme base selon l'une quelconque des revendications 1 à 9,
- 2 à 15% en masse d'un agent plastifiant,
- 20 à 60% en masse d'un agent sucrant
- 0 à 0,5% d'au moins un édulcorant intense typiquement choisi parmi le sucralose, l'acesulfame de potassium, l'aspartame, et leur mélange.
- 0 et 1% en masse d'un colorant
- 0,5 à 15% en masse d'un arôme
ledit chewing-gum ayant une teneur en eau inférieure à 5%.

11. Chewing-gum selon la revendication 10 **caractérisé en ce qu'**il présente une couche de dragée.

12. Procédé d'obtention d'une gomme base, **caractérisé en ce qu'**il comprend :
- une étape de chauffage de 30 à 70% en masse d'un élastomère à une température comprise entre 30 et 45°C,
- une étape d'addition de 1 à 20% en masse d'un gluten de blé vital,
- une étape d'addition de 1 à 20% en masse d'un agent plastifiant, typiquement ledit agent plastifiant est ajouté au gluten avant incorporation dans la composition,
- une étape d'addition de 5 à 25% en masse d'au moins une cire typiquement ayant un point de fusion compris entre 50 et 90°C, et
- une étape d'addition de 0.1 à 25% de charges minérales.

13. Procédé d'obtention d'un chewing-gum, **caractérisé en ce qu'**il comprend :
- une étape fourniture d'une gomme base selon l'une quelconque des revendications 1 à 9 ou la mise en oeuvre d'une méthode d'obtention d'une gomme base selon la revendication 12,
- une étape de mélange de 20 à 40% en masse de ladite gomme base avec 3 à 15% en masse d'un agent plastifiant, 20 à 60% en masse d'un agent sucrant, 0 à 0,5% d'au moins un édulcorant intense et optionnellement, 0,5 à 15% en masse d'un arome et/ou 0 et 1% en masse d'un colorant.

14. Procédé d'obtention d'un chewing-gum selon la revendication 13, **caractérisé en ce qu'**il comprend une étape de dragéification.

15. Procédé d'obtention d'un chewing-gum selon la revendication 14, **caractérisé en ce que** l'étape de dragéification est précédée d'une étape de gommage.

## Patentansprüche

1. Kaugummigrundmasse, umfassend
- 30 bis 70 Ma% eines Elastomers,
- 1 bis 20 Ma% Weizengluten,
- 1 bis 20 Ma% Weichmacher,
- 5 bis 25 Ma% Wachs, wobei das Wachs einen Schmelzpunkt hat, der zwischen 50 und 90 °C liegt, und
- 0,1 bis 25 Ma% mineralischen Füllstoff.

2. Kaugummigrundmasse nach Anspruch 1, **dadurch gekennzeichnet, dass** sie 40 bis 60 % Elastomer umfasst.

3. Kaugummigrundmasse nach Anspruch 1 oder 2, **dadurch gekennzeichnet, dass** der mineralische Füllstoff pulverförmig ist.

4. Kaugummigrundmasse nach einem der Ansprüche 1 bis 3, **dadurch gekennzeichnet, dass** der Weichmacher Glycerin ist und dass das Massenverhältnis Gluten/Glycerin zwischen 1/3 und 2/3 liegt.

5. Kaugummigrundmasse nach einem der Ansprüche 1 bis 4, **dadurch gekennzeichnet, dass** das Wachs ein Wachsgemisch ist.

6. Kaugummigrundmasse nach Anspruch 5, **dadurch gekennzeichnet, dass** das Gemisch mindestens ein erstes Wachs mit einem Schmelzpunkt hat, der zwischen 60 und 65 °C liegt, und mindestens ein zweites Wachs mit einem Schmelzpunkt, der zwischen 80 und 85 °C liegt.

7. Kaugummigrundmasse nach einem der Ansprüche 1 bis 6, **dadurch gekennzeichnet, dass** sie eine Temperatur auf dem Peak des Verlustfaktors Tan Delta zwischen 33 und 45 °C und/oder einen Abfall des dynamischen Elastizitätsmoduls E' zwischen -2 und -20 °C aufweist.

8. Kaugummigrundmasse nach einem der Ansprüche 1 bis 7, **dadurch gekennzeichnet, dass** sie ein Gemisch umfasst
- eines Elastomers, das eine Temperatur auf dem Peak des Verlustfaktors Tan Delta über 45 °C und/oder einen Abfall des dynamischen Elastizitätsmoduls E' über -22 °C aufweist, und
- eines Elastomers, das eine Temperatur auf dem Peak des Verlustfaktors Tan Delta unter 33 °C und/oder einen Abfall des dynamischen Elastizitätsmoduls E' unter -1,2 °C aufweist.

9. Kaugummigrundmasse nach einem der Ansprüche 1 bis 8, **dadurch gekennzeichnet, dass** das Wachs natürlichen Ursprungs ist, vorzugsweise ein pflanzliches, mineralisches Wachs und/oder tierischen Ursprungs, wobei in typischer Weise das pflanzliche Wachs aus dem Candelillawachs, dem Carnaubawachs, dem Zuckerrohrwachs, dem Reiskleiewachs, dem Wachs der Myricabeere, dem Sonnenblumenwachs, der Kokosbutter, der Sheabutter oder dem Japanwachs ausgewählt ist und das tierische Wachs aus dem Bienenwachs, dem Lanolin und dem Walwachs ausgewählt ist.

10. Kaugummi, umfassend:
- 20 bis 40 Ma% einer Kaugummigrundmasse nach einem der Ansprüche 1 bis 9,
- 2 bis 15 Ma% eines Weichmachers,
- 20 bis 60 Ma% eines Süßungsmittels,
- mindestens 0 bis 0,5 % eines intensiven Süßstoffs, der in typischer Weise aus der Sucralose, dem Acesulfam-K, dem Aspartam und deren Gemischen ausgewählt ist,
- 0 und 1 Ma% eines Farbstoffs,
- 0,5 bis 15 Ma% eines Aromas,
wobei der Kaugummi einen Wassergehalt unter 5 % hat.

11. Kaugummi nach Anspruch 10, **dadurch gekennzeichnet, dass** er eine Drageeschicht aufweist.

12. Verfahren zur Herstellung einer Kaugummigrundmasse, **dadurch gekennzeichnet, dass** es umfasst:
- einen Schritt des Erhitzens von 30 bis 70 Ma% eines Elastomers auf eine Temperatur zwischen 30 und 45 °C,
- einen Schritt des Hinzufügens von 1 bis 20 Ma% eines vitalen Weizenglutens,
- einen Schritt des Hinzufügens von 1 bis 20 Ma% eines Weichmachers, wobei der Weichmacher dem Gluten in typischer Weise vor dem Einarbeiten in die Zusammensetzung hinzugefügt wird,
- einen Schritt des Hinzufügens von 5 bis 25 Ma% mindestens eines Wachses mit in typischer Weise einem Schmelzpunkt zwischen 50 und 90 °C, und
- einen Schritt des Hinzufügens von 0,1 bis 25 % mineralische Füllstoffe.

13. Herstellungsverfahren eines Kaugummis, **dadurch gekennzeichnet, dass** es umfasst:
- einen Schritt des Bereitstellens einer Kaugummigrundmasse nach einem der Ansprüche 1 bis 9 oder die Durchführung einer Herstellungsmethode einer Kaugummigrundmasse nach Anspruch 12,
- einen Schritt des Mischens von 20 bis 40 Ma% der Kaugummigrundmasse mit 3 bis 15 Ma% eines Weichmachers, 20 bis 60 Ma% eines Süßungsmittels, 0 bis 0,5 % mindestens eines intensiven Süßstoffs und optional 0,5 bis 15 Ma% eines Aromas und/oder 0 und 1 Ma% eines Farbstoffs.

14. Herstellungsverfahren eines Kaugummis nach Anspruch 13, **dadurch gekennzeichnet, dass** es einen Dragierschritt umfasst.

15. Herstellungsverfahren eines Kaugummis nach Anspruch 14, **dadurch gekennzeichnet, dass** vor dem Dragierschritt ein Gummierschritt erfolgt.

## Claims

1. Gum base including
- 30 to 70% by mass of an elastomer,
- 1 to 20% by mass of wheat gluten,
- 1 to 20% by mass of plasticizer,
- 5 to 25% by mass of wax, said wax having a melting point of between 50 and 90 °C, and
- 0.1 to 25% by mass of mineral filler.

2. Gum base according to claim 1, **characterized in that** it comprises 40 to 60% of elastomer.

3. Gum base according to claim 1 or claim 2, **characterized in that** the mineral filler is in powdery form.

4. Gum base according to any one of claims 1 to 3, **characterized in that** the plasticizer is glycerin and **in that** the gluten / glycerin mass ratio is between 1/3 and 2/3.

5. Gum base according to any one of claims 1 to 4, **characterized in that** said wax is a mixture of waxes.

6. Gum base according to claim 5, **characterized in that** the mixture comprises at least one first wax having a melting point of between 60 and 65 °C and at least one second wax having a melting point between 80 and 85 °C.

7. Gum base according to any one of claims 1 to 6, **characterized in that** it has a temperature at the loss factor tan delta peak of between 33 and 45°C and a drop in dynamic modulus of elasticity E' between -2 and -20°C.

8. Gum base according to any one of claims 1 to 7, **characterized in that** it comprises a mixture
- of an elastomer having a temperature at the loss factor tan delta peak above 45°C and/or a drop in dynamic modulus of elasticity E' above -22°C, and
- of an elastomer having a temperature at the loss factor tan delta peak below 33°C and/or a drop in dynamic modulus of elasticity E' below -1.2°C.

9. Gum base according to any one of claims 1 to 8, **characterized in that** said wax is of natural origin, preferably vegetable waxes, mineral and / or of animal origin, typically, the vegetable wax is chosen from candelilla wax, carnauba wax, sugarcane wax, rice bran wax, Myrica berry wax, sunflower wax, coconut butter, shea butter or Japanese wax and the animal wax is chosen from beeswax, lanolin and whale wax.

10. A Chewing gum comprising:
- 20 to 40% by mass of a gum base according to any one of claims 1 to 9,
- 2 to 15% by mass of a plasticizer,
- 20 to 60% by mass of a sweetening agent
- 0 to 0.5% of at least one intense sweetener typically chosen from sucralose, potassium acesulfame, aspartame, and their mixture,
- 0 and 1% by mass of a colorant
- 0.5 to 15% by mass of a flavoring
said chewing gum having a water content of less than 5%.

11. Chewing gum according to claim 10, **characterized in that** it has a sweet-coating layer.

12. Process for obtaining a gum base, **characterized in that** it comprises:
- a step of heating 30 to 70% by mass of an elastomer at a temperature between 30 and 45 °C,
- a step of adding 1 to 20% by mass of a vital wheat gluten,
- a step of adding 1 to 20% by mass of a plasticizer, typically said plasticizer is added to gluten before incorporation into the composition,
- a step of adding 5 to 25% by mass of at least one wax typically having a melting point between 50 and 90 °C, and
- a step of addition of 0.1 to 25% of mineral fillers.

13. Process for obtaining a chewing gum, **characterized in that** it comprises:
- a step of providing a gum base according to any one of claims 1 to 9 or the implementation of a method for obtaining a gum base according to claim 12
- a step of mixing 20 to 40% by mass of said gum base with 3 to 15% by mass of a plasticizer, 20 to 60% by mass of a sweetening agent, 0 to 0.5% of at least one intense sweetener and optionally, 0.5 to 15% by mass of a flavoring and / or 0 to 1% by mass of a dye.

14. The process for obtaining a chewing gum according to claim 13, **characterized in that** it comprises a step of sweet-coating.

15. The process for obtaining a chewing gum according to claim 14, **characterized in that** the sweet-coating step is preceded by a scrubbing step.
